# EUROPEAN PATENT APPLICATION

(11) **EP 4 836 553 A1**
(43) Date of publication of application: **04.11.2026**
(21) Application number: 24911057.8
(22) Date of filing: 23.12.2024
(51) Int. Cl.: H04W 68/02

(54) **PAGING METHOD AND APPARATUS, DEVICE, AND STORAGE MEDIUM**

(30) Priority: 25.12.2023 CN 202311799433
(71) Applicant: Vivo Mobile Communication Co., Ltd., Dongguan, Guangdong 523863 (CN)
(72) Inventor: LIU, Xuanbing, Dongguan, Guangdong 523863 (CN); YANG, Xiaodong, Dongguan, Guangdong 523863 (CN)
(74) Representative: Germain Maureau
(86) International application number: PCT/CN2024/141545
(87) International publication number: WO 2025/140129

(57) **Abstract**

This application discloses a paging method, an apparatus, a device, and a storage medium, and belongs to the field of communications. The paging method in embodiments of this application includes: receiving, by a target terminal, a first paging message sent by a first communication device; and sending, by the target terminal, a first paging response to the first communication device in a case that a paging response condition is satisfied. This avoids an invalid paging response and further avoids execution of an invalid task.

## Description

### CROSS-REFERENCE TO RELATED APPLICATIONS

This application claims priority to Chinese Patent Application No. 202311799433.3, filed with the China National Intellectual Property Administration on December 25, 2023, and entitled "PAGING METHOD, APPARATUS, DEVICE, AND STORAGE MEDIUM", which is incorporated herein by reference in its entirety.

### TECHNICAL FIELD

This application belongs to the field of communication technologies, and specifically relates to a paging method, an apparatus, a device, and a storage medium.

### BACKGROUND

Currently, there may be a situation in which a network device performs repeated paging on some terminals, resulting in a terminal that has previously been successfully paged needing to send a paging response to the network device again. Obviously, such a repeated paging response is an invalid paging response, and the invalid paging response causes execution of an invalid task on the terminal, for example, causing repeated inventory, repeated transmission of sensing data, repeated positioning, and repeated commands on some ambient power-enabled Internet of Things (Ambient power-enabled Internet of Things, A-IoT) devices.

### SUMMARY

Embodiments of this application provide a paging method, an apparatus, a device, and a storage medium, to resolve a technical problem of execution of an invalid task caused by an invalid paging response.

According to a first aspect, a paging method is provided. The method is performed by a target terminal and includes: receiving a first paging message sent by a first communication device; and sending a first paging response to the first communication device in a case that a paging response condition is satisfied, where
the first paging message includes at least one of the following:
a value tag for identifying the first paging message;
a session identifier of a session to which the first paging message belongs;
a cell identifier of a cell for sending the first paging message;
a paging range identifier of the first paging message; and
a first indication, where the first indication indicates the target terminal to respond to the first paging message, or indicates the target terminal to detect, based on information other than the first indication, whether to respond to the first paging message.

According to a second aspect, a paging method is provided. The method is performed by a first communication device and includes: sending a first paging message to a target terminal; and receiving a first paging response sent by the target terminal in a case that a paging response condition is satisfied, where
the first paging message includes at least one of the following:
a value tag for identifying the first paging message;
a session identifier of a session to which the first paging message belongs;
a cell identifier of a cell for sending the first paging message;
a paging range identifier of the first paging message; and
a first indication, where the first indication indicates the target terminal to respond to the first paging message, or indicates the target terminal to detect, based on information other than the first indication, whether to respond to the first paging message.

According to a third aspect, a paging apparatus is provided, including: a communication module, configured to: receive a first paging message sent by a first communication device; and send a first paging response to the first communication device in a case that a paging response condition is satisfied, where
the first paging message includes at least one of the following:
a value tag for identifying the first paging message;
a session identifier of a session to which the first paging message belongs;
a cell identifier of a cell for sending the first paging message;
a paging range identifier of the first paging message; and
a first indication, where the first indication indicates the paging apparatus to respond to the first paging message, or indicates the paging apparatus to detect, based on information other than the first indication, whether to respond to the first paging message.

According to a fourth aspect, a paging apparatus is provided, including: a communication module, configured to: send a first paging message to a target terminal; and receive a first paging response sent by the target terminal in a case that a paging response condition is satisfied, where
the first paging message includes at least one of the following:
a value tag for identifying the first paging message;
a session identifier of a session to which the first paging message belongs;
a cell identifier of a cell for sending the first paging message;
a paging range identifier of the first paging message; and
a first indication, where the first indication indicates the target terminal to respond to the first paging message, or indicates the target terminal to detect, based on information other than the first indication, whether to respond to the first paging message.

According to a fifth aspect, a terminal is provided. The terminal includes a processor and a memory. The memory stores a program or instructions runnable on the processor; and when executed by the processor, the program or instructions implement the steps of the method according to the first aspect.

According to a sixth aspect, a terminal is provided, including a communication interface. The communication interface is configured to: receive a first paging message sent by a first communication device; and send a first paging response to the first communication device in a case that a paging response condition is satisfied.

According to a seventh aspect, a communication device is provided. The communication device includes a processor and a memory. The memory stores a program or instructions runnable on the processor; and when executed by the processor, the program or instructions implement the steps of the method according to the second aspect.

According to an eighth aspect, a communication device is provided, including a communication interface. The communication interface is configured to: send a first paging message to a target terminal; and receive a first paging response sent by the target terminal in a case that a paging response condition is satisfied.

According to a ninth aspect, a readable storage medium is provided. A program or instructions are stored on the readable storage medium; and when executed by a processor, the program or instructions implement the steps of the method according to the first aspect, or the steps of the method according to the second aspect.

According to a tenth aspect, a wireless communication system is provided, including a terminal and a communication device. The terminal can be configured to perform the steps of the method according to the first aspect, and the communication device can be configured to perform the steps of the method according to the second aspect.

According to an eleventh aspect, a chip is provided. The chip includes a processor and a communication interface. The communication interface is coupled to the processor, and the processor is configured to run a program or instructions to implement the method according to the first aspect, or the method according to the second aspect.

According to a twelfth aspect, a computer program/program product is provided. The computer program/program product is stored in a storage medium, and the program/program product is executed by at least one processor to implement the steps of the paging method according to the first aspect or the second aspect.

In embodiments of this application, the target terminal responds to paging only in a case that the paging response condition is satisfied. This avoids an invalid paging response and further avoids execution of an invalid task.

### BRIEF DESCRIPTION OF DRAWINGS

FIG. 1 is a block diagram of a wireless communication system to which an embodiment of this application can be applied;
FIG. 2 is a block diagram of another wireless communication system to which an embodiment of this application can be applied;
FIG. 3 is a schematic diagram of backscatter communication;
FIG. 4 is a diagram of a principle of backscatter communication according to this application;
FIG. 5 is a flowchart of interaction of a paging method according to an embodiment of this application;
FIG. 6 is a flowchart of interaction of another paging method according to an embodiment of this application;
FIG. 7 is a schematic diagram of a paging apparatus 700 according to an embodiment of this application;
FIG. 8 is a schematic diagram of a paging apparatus 800 according to an embodiment of this application;
FIG. 9 is a schematic block diagram of a communication device according to an embodiment of this application;
FIG. 10 is a schematic diagram of a hardware structure of a terminal implementing an embodiment of this application; and
FIG. 11 is a schematic diagram of a hardware structure of a communication device implementing an embodiment of this application.

### DESCRIPTION OF EMBODIMENTS

The technical solutions in embodiments of this application are clearly described below with reference to the accompanying drawings in embodiments of this application. It is clear that the described embodiments are a part of embodiments of this application, rather than all embodiments. All other embodiments obtained by persons of ordinary skill in the art based on embodiments of this application all fall within the protection scope of this application.

The terms "first", "second", and the like in this application are used to distinguish between similar objects, but are not used to describe a specific order or sequence. It should be understood that the terms used in such a way are interchangeable under appropriate circumstances, so that embodiments of this application can be implemented in sequences other than those illustrated or described herein, and objects distinguished by "first" and "second" are usually of one type, but do not limit a quantity of objects, for example, there may be one or more first objects. In addition, "or" in this application indicates at least one of the associated objects. For example, "A or B" covers three schemes, namely, scheme 1: including A but not including B; scheme 2: including B but not including A; scheme 3: including both A and B. The character "/" generally indicates that the preceding and following associated objects are in an "or" relationship.

The term "indication" in this application may be a direct indication (or explicit indication) or an indirect indication (or implicit indication). The direct indication may be understood as that a sender explicitly informs a receiver of content such as specific information, an operation to be performed, or a requested result, in a sent indication. The indirect indication may be understood as that the receiver determines corresponding information based on the indication sent by the sender, or makes a judgment and determines the operation to be performed or the requested result based on a result of the judgment.

It should be noted that the technology described in embodiments of this application is not limited to a long term evolution (Long Term Evolution, LTE)/LTE-advanced (LTE-Advanced, LTE-A) system, and may also be applied to another wireless communication system such as a code-division multiple access (Code-Division Multiple Access, CDMA) system, a time-division multiple access (Time-Division Multiple Access, TDMA) system, a frequency-division multiple access (Frequency-Division Multiple Access, FDMA) system, an orthogonal frequency-division multiple access (Orthogonal Frequency-Division Multiple Access, OFDMA) system, a single-carrier frequency-division multiple access (Single-carrier Frequency-Division Multiple Access, SC-FDMA) system, or another system. The terms "system" and "network" in embodiments of this application are often used interchangeably, and the described technology can be used not only in the above-mentioned systems and radio technologies, but also in other systems and radio technologies. The following description describes a new radio (New Radio, NR) system for exemplary purposes, and uses the term NR in most of the following description, but these technologies can also be applied to systems other than the NR system, such as the 6th Generation (6th Generation, 6G) communication system.

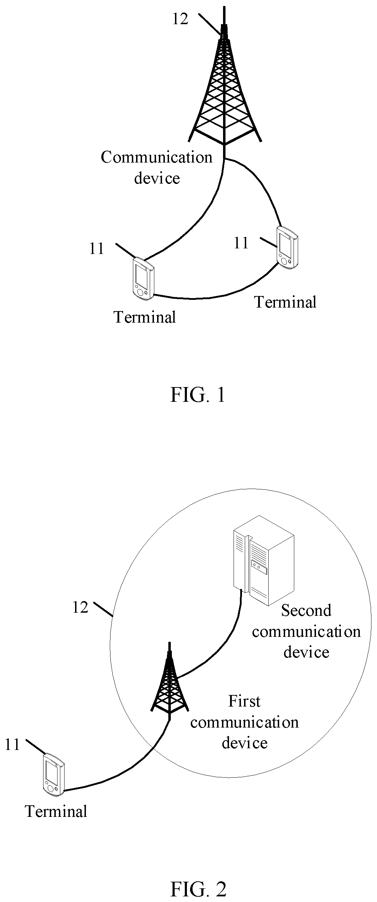

FIG. 1 is a block diagram of a wireless communication system to which an embodiment of this application can be applied. The wireless communication system includes a terminal 11 and a communication device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), smart home (a home device with a wireless communication function, for example, a refrigerator, a TV, a washing machine, or furniture), a game console, a personal computer (Personal Computer, PC), a teller machine, a self-service machine, an IoT device, or an A-IoT device.

A-IoT is a 3rd Generation Partnership Project (3rd Generation Partnership Project, 3GPP) Internet of Things technology. An A-IoT device is an ultra-low complexity and ultra-low power consumption terminal that obtains, through energy harvesting, energy required for communication. The A-IoT device has no battery, or has a limited energy storage capability (for example, uses a capacitor), and an energy source harvested by the A-IoT device includes wind energy, kinetic energy, thermal energy, radio waves, light, or another suitable energy source.

In embodiments of this application, the A-IoT device is also referred to as an ultra-low power consumption terminal, an ultra-low complexity terminal, a zero power consumption terminal, and the like. This is not limited in embodiments of this application.

It should be understood that if the A-IoT device provided in embodiments of this application uses a backscatter technology, the A-IoT device may also be referred to as a backscatter communication device or a backscatter device.

A-IoT devices can be classified based on an energy source (energy source), an energy storage capability (energy storage capability), passive (Passive) or active (Active) transmission, or the like, and include a plurality of categories of devices:
(1) a passive device (Passive Device), which has an energy storage capability and no independent signal generation/amplification capability, and uses a backscatter technology for data transmission;
(2) a semi-passive device (semi-passive Device), which also belongs to the category of the passive device (Passive Device), has an energy storage capability and no independent signal generation capability, and uses a backscatter technology for data transmission, where energy stored by the semi-passive device can be used to amplify a reflected signal;
(3) an active device (Active Device), which has an energy storage capability and an independent signal generation capability, that is, has active radio frequency components for data transmission; and
(4) a passive device, which has no energy stored, and uses a backscatter technology for data transmission.

The wearable device includes a smart watch, a smart band, smart headphones, smart glasses, smart jewelry (a smart bracelet, a smart wrist bracelet, a smart ring, a smart necklace, a smart anklet, a smart ankle chain, and the like), a smart wristband, smart clothing, and the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. It should be noted that embodiments of this application do not limit a specific type of the terminal 11.

The communication device 12 may be an access network device, an intermediate node, an assisting node, a terminal device, a reader/writer, a distributed unit (Distributed Unit, DU) of an access network device, or the like, as shown in FIG. 1.

Alternatively, the communication device 12 may include a first communication device and a second communication device, as shown in FIG. 2. The first communication device may be an access network device, an intermediate node, an assisting node, a terminal device, a reader/writer, a DU, or the like, and the second communication device may be a core network device or a central unit (Central Unit, CU) of an access network device.

The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as NodeB (NodeB, NB), Evolved NodeB (Evolved NodeB, eNB), next generation NodeB (the next generation NodeB, gNB), new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), home NodeB (home NodeB, HNB), home evolved NodeB (home evolved NodeB), a transmission reception point (Transmission Reception Point, TRP), or another suitable term in the field. As long as the same technical effect is achieved, the base station is not limited to a specific technical term. It should be noted that in embodiments of this application, the base station in the NR system is taken as an example for introduction, and the specific type of the base station is not limited.

The intermediate node may be, but is not limited to, an intermediate node located between the terminal 11 and another network device, such as an access network device. The assisting node may, but is not limited to, be used to assist communication between the terminal 11 and another network device, such as an access network device.

In a radio frequency identification (Radio Frequency Identification, RFID) system, a reader/writer is an important component. It communicates wirelessly with an electronic tag through an antenna, and can read or write tag identification code and memory data. The reader/writer communicates with the electronic tag by transmitting electromagnetic waves. When the electromagnetic wave encounters the electronic tag, one part of energy is absorbed by the tag, and the other part of energy is scattered by the tag to all directions. A small part of energy is reflected back to the reader/writer, and received and processed by the reader/writer, thereby achieving identification and data reading on the tag. In the RFID system, the reader/writer needs to have a capability of transmitting and receiving electromagnetic waves, as well as a capability of processing a backscatter signal. In addition, the reader/writer also needs to perform matching for the electronic tag, to ensure communication stability and reliability.

The reader/writer may also be referred to as a reader, a querier, a communicator, a scanner, a programmer, a standalone device, a portable reader, an automatic device identification device, and the like.

The CU of the access network device supports upper layers of a protocol stack, such as service data adaptation protocol (Service Data Adaptation Protocol, SDAP), packet data convergence protocol (Packet Data Convergence Protocol, PDCP), and radio resource control (Radio Resource Control, RRC).

The DU of the access network device supports lower layers of the protocol stack, such as radio link control (Radio Link Control, RLC), media access control (Media Access Control, MAC), and a physical layer.

Each access network device corresponds to one CU, but one CU can control a plurality of DUs. Each DU can support one or more cells (cell). An interface between the CU and the DU is an F1 interface.

The core network device may include, but is not limited to, at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function unit (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, or L-NEF), binding support function (Binding Support Function, BSF), application function (Application Function, AF), and the like. It should be noted that in embodiments of this application, the core network device in the NR system is taken as an example for introduction, and a specific type of the core network device is not limited. However, not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function unit (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, or L-NEF), binding support function (Binding Support Function, BSF), application function (Application Function, AF), and the like. It should be noted that in embodiments of this application, the core network device in the NR system is taken as an example for introduction, and the specific type of the core network device is not limited.

Before the technical solutions of this application are introduced, related knowledge of this application is explained below:

### I. Backscatter communication (Backscatter Communication, BSC)

As described above, the terminal can collect an RF signal sent by the network device and use a backscatter technology for data transmission.

Backscatter communication refers to a terminal (that is, a backscatter communication device) transmitting its own information by using an RF signal from another device or environment to perform signal modulation. Backscatter (backscatter) technology, as a passive or low-energy consumption technology, has a technical feature of completing the transmission of its own signal by changing the characteristics of the received RF signal, such as phase or amplitude information, to achieve information transmission with extremely low power consumption or zero power consumption.

The following takes backscatter communication between the reader/writer and the tag as an example to explain backscatter communication and a principle of backscatter communication:

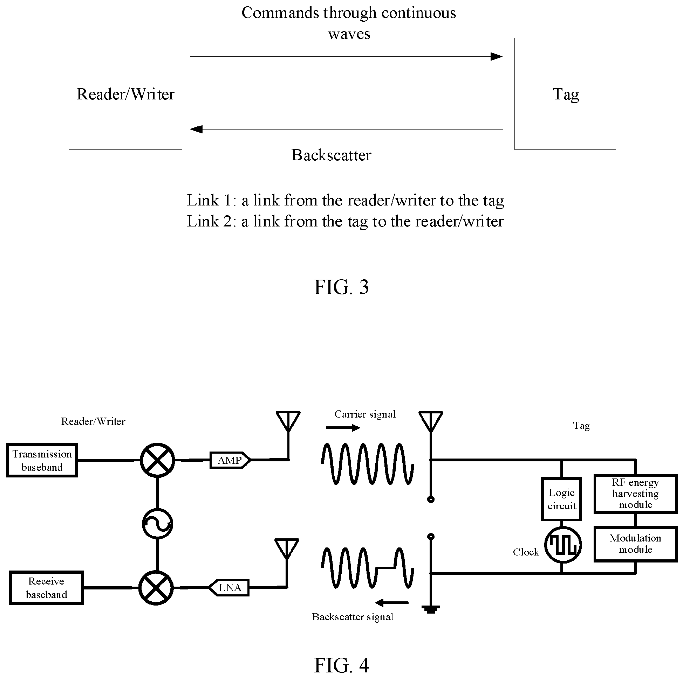

FIG. 3 is a schematic diagram of backscatter communication. As shown in FIG. 3, there are two links between the reader/writer and the tag. Link 1 is a link from the reader/writer to the tag, and link 2 is a link from the tag to the reader/writer. The reader/writer sends commands to the tag through continuous waves, and the tag transmits data to the reader/writer by using a backscatter technology.

FIG. 4 is a diagram of a principle of backscatter communication according to this application. As shown in FIG. 4, the tag can receive a carrier signal provided by a transmission baseband of the reader/writer, collect energy by using an RF energy harvesting module, and then power a modulation module, so that the modulation module modulates the carrier signal and performs backscattering.

The tag controls a reflection coefficient Γ of a circuit by adjusting its internal impedance Γ, thereby changing an amplitude, frequency, phase, and the like of the carrier signal to achieve signal modulation. The reflection coefficient Γ can be expressed as: $Γ = \left(Z_1-Z_0\right) / \left(Z_1+Z_0\right) = \left|Γ\right| e ∧ \left(jθ_T\right)$

*Z*_0 is an antenna characteristic impedance, and *Z_*1 is a load impedance. Assuming that the carrier signal is *S*_in(t), an output signal of the tag is *S*_out(t) = *S*_in(t)|Γ|e∧(*jθ*_T). Therefore, corresponding amplitude modulation, frequency modulation or phase modulation can be achieved by reasonably controlling the reflection coefficient Γ.

### II. Paging process

A network may send a paging message to a terminal in an idle state (RRC_IDLE), an inactive state (RRC_INACTIVE), and a connected state (RRC_CONNECTED).

The paging process may be triggered by a core network to notify a terminal to receive a paging request, or triggered by an access network device to notify system information update and notify a terminal to receive earthquake and tsunami warning system (Earthquake and Tsunami Warning System, ETWS) information, commercial mobile alert system (Commercial Mobile Alert System, CMAS) information, or the like.

In a case that the core network triggers paging, a paging message sent by a core network device to the access network device may carry paging assistance information (Assistance Data for Paging) for paging optimization.

It should be understood that the paging assistance information may also be referred to as paging assistance data, and this is not limited in embodiments of this application.

In some implementable manners, the paging assistance information includes, but is not limited to, at least one of the following: recommended cell list (Recommended Cell List) and paging attempt count (Paging Attempt Count).

As described above, currently there may be a situation in which the network device performs repeated paging on some terminals, resulting in a terminal that has been paged successfully previously needing to send a paging response to the network device again. Obviously, such a repeated paging response is an invalid paging response, and the invalid paging response causes execution of an invalid task on the terminal, for example, causing repeated inventory, repeated transmission of sensing data, repeated positioning, and repeated commands on some A-IoT devices.

For example, in the Internet of Things (Internet of Things, IoT), the network device often needs to page a plurality of A-IoT devices at the same time to execute tasks such as inventory, transmission of sensing data, positioning, and command control on these A-IoT devices. Currently, after the network device completes one paging process for a plurality of A-IoT devices, if there is a paging failure for part of A-IoT devices, the network device needs to perform a paging expansion operation or repeated paging on the plurality of A-IoT devices, resulting in an A-IoT device that has been paged successfully previously needing to send a paging response to the network device again. However, the paging response is an invalid paging response, and the invalid paging response causes execution of an invalid task on an A-IoT device, for example, causing repeated inventory, repeated transmission of sensing data, repeated positioning, and repeated commands on some A-IoT devices.

In order to resolve the above technical problem, embodiments of this application propose that the terminal responds to paging only in a case that a paging response condition is satisfied. This avoids an invalid paging response and further avoids execution of an invalid task.

The paging method provided in embodiments of this application are described in detail below with reference to the accompanying drawings by using some embodiments and their application scenarios.

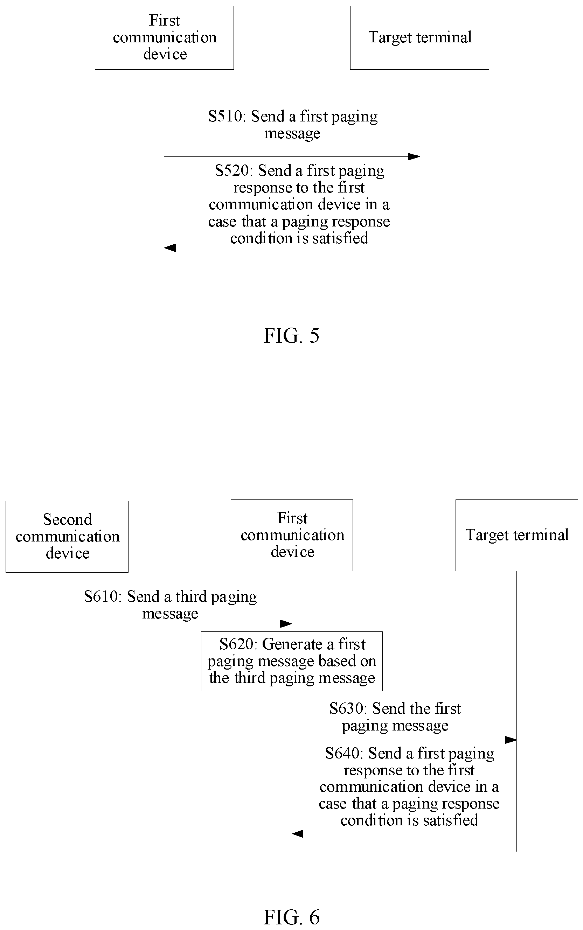

FIG. 5 is a flowchart of interaction of a paging method according to an embodiment of this application. As shown in FIG. 5, the method can be performed by a target terminal and a first communication device. The target terminal may be, but is not limited to, the terminal 11 in FIG. 1. The first communication device may be, but is not limited to, the communication device 12 in FIG. 1 or the first communication device in FIG. 2. As shown in FIG. 5, the method can include:

S510: The first communication device sends a first paging message to the target terminal.

S520: The target terminal sends a first paging response to the first communication device in a case that a paging response condition is satisfied.

In some implementable manners, the first paging message includes at least one of the following:
(1) a value tag (value tag) for identifying the first paging message;
(2) a session identifier of a session to which the first paging message belongs;
(3) a cell identifier of a cell for sending the first paging message;
(4) a paging range identifier of the first paging message; and
(5) a first indication, where the first indication indicates the target terminal to respond to the first paging message, or indicates the target terminal to detect, based on information other than the first indication, whether to respond to the first paging message.

It should be understood that because the value tag of the first paging message is used to identify the first paging message, the value tag of the first paging message is also referred to as an identifier of the first paging message.

In some implementable manners, the value tag of the first paging message is used to distinguish between the first paging message and another paging message in terms of, but not limited to, at least one of the following: paging purpose and carried content. It can be understood that if a plurality of paging messages are the same in terms of at least one of the paging purpose and the carried content, the value tags of the plurality of paging messages are the same. The paging purpose may be used to execute, but not limited to, a task or service, for example, a paging purpose of a paging message is used to inventory A-IoT device 1, A-IoT device 2, ..., and A-IoT device 10.

For example, content carried by two paging messages is the same, for example, both carry the above value tag, where the value tags of the two paging messages are both 1.

For example, paging purposes of two paging messages are the same, for example, both are used to inventory A-IoT device 1, A-IoT device 2, ..., and A-IoT device 10, where the value tags of the two paging messages are both 1.

For example, content carried by two paging messages is the same, and paging purposes of the two are the same, for example, both carry the above value tag, and both are used to inventory A-IoT device 1, A-IoT device 2, ..., and A-IoT device 10, where the value tags of the two paging messages are both 1.

In some implementable manners, the session to which the first paging message belongs is used to define a task. The task is also referred to as a round of A-IoT process or service, for example, a round of inventory process for A-IoT device 1, A-IoT device 2, ..., and A-IoT device 10.

In some implementable manners, the session identifier of the session to which the first paging message belongs may also be referred to as, but not limited to, a task identifier of a task to which the first paging message belongs.

It should be understood that different session identifiers are used to identify different sessions. For example, session identifier 01 is used to identify a round of inventory process for A-IoT device 1, A-IoT device 2, ..., and A-IoT device 10, and session identifier 02 is used to identify a round of inventory process for A-IoT device 20, A-IoT device 21, ..., and A-IoT device 30.

In some implementable manners, there may be one or more cells for sending the first paging message, but this is not limited. For example, cell A is the cell for sending the first paging message.

In some implementable manners, the paging range identifier of the first paging message includes, but is not limited to, at least one of the following:
(1) an identifier of the first communication device;
(2) an identifier of a target cell;
(3) a tracking area (Tracking Area, TA) identifier of the TA in which the target cell is located; and
(4) a radio access network notification area (RAN notification area, RNA) identifier of an RNA in which the target cell is located.

The paging message sent by the target cell has the same paging purpose as the first paging message, where the target cell may include the cell for sending the first paging message.

The following is an exemplary description of the target cell:
For example, cell A is used to send paging message 1, and a paging purpose of cell A is to inventory A-IoT device 1, A-IoT device 2, ..., and A-IoT device 10, and a paging purpose of a paging message sent by cell B is also to inventory A-IoT device 1, A-IoT device 2, ..., and A-IoT device 10. Based on this, the target cell includes cell A and cell B.

It should be understood that when the first indication indicates the target terminal to respond to the first paging message, it indicates that the first communication device forcibly indicates the target terminal to respond to the first paging message.

In some implementable manners, the first indication indicates the target terminal to detect, based on information other than the first indication, whether to respond to the first paging message includes: The first indication indicates the target terminal to detect, based on at least one type of information in the first paging message other than the first indication, whether to respond to the first paging message. The first indication may explicitly indicate the target terminal to detect, based on which information, whether to respond to the first paging message, or may not perform explicit indication, but the target terminal determines whether to detect, by using which information, whether to respond to the first paging message, or the first paging message carries which information other than the first indication, and the target terminal uses the information to detect whether to respond to the first paging message.

For example, if the first indication indicates the target terminal to detect, based on the value tag of the first paging message, whether to respond to the first paging message, the target terminal may detect, based on the value tag of the first paging message, whether to respond to the first paging message.

For example, if the first indication indicates to detect, based on information other than the first indication, whether to respond to the first paging message, the target terminal may determine to detect, based on the value tag of the first paging message, whether to respond to the first paging message.

For example, if the first indication indicates to detect, based on information other than the first indication, whether to respond to the first paging message, and the first paging message carries the first indication, the value tag of the first paging message, and the session identifier of the session to which the first paging message belongs, the target terminal may detect, based on the value tag of the first paging message and the session identifier of the session to which the first paging message belongs, whether to respond to the first paging message.

In some implementable manners, that the first indication indicates the target terminal to respond to the first paging message may also be referred to as that the first indication indicates the target terminal to ignore information other than the first indication.

In some implementable manners, the paging response condition includes at least one of the following:
(1) the first paging message is a paging message received by the target terminal for the first time;
(2) the value tag of the first paging message is different from a value tag of a second paging message received by the target terminal previously;
(3) a first paging timer expires;
(4) the first paging timer is configured and the first paging timer is not started;
(5) the session identifier of the session to which the first paging message belongs is different from a session identifier of a session to which the second paging message belongs;
(6) the cell identifier of the cell for sending the first paging message is different from a cell identifier of a cell for sending the second paging message;
(7) the paging range identifier of the first paging message is different from a paging range identifier of the second paging message;
(8) a paging range identified by the paging range identifier of the first paging message does not include a paging range identified by the paging range identifier of the second paging message;
(9) the paging range identified by the paging range identifier of the first paging message does not include the cell for sending the second paging message; and
(10) the first indication indicates the target terminal to respond to the first paging message.

It should be understood that item (3) and item (4) in the paging response condition may be selected alternatively, and item (7), item (8), and item (9) in the paging response condition may be selected alternatively.

It should be understood that embodiments of this application mainly address whether to respond to a repeated paging message. Based on this, if the first paging message is the paging message received by the target terminal for the first time, it is considered that the target terminal satisfies the paging response condition. In this case, the target terminal can send, to the first communication device, the first paging response corresponding to the first paging message.

In some implementable manners, when receiving any paging message, the target terminal can store part or all of information in the paging message. Based on this, that the first paging message is a paging message received by the target terminal for the first time is also referred to as information received when the target terminal has not stored any paging message, or the paging message received by the target terminal for the first time is a paging message received by the target terminal when the target terminal has not stored any paging message.

It should be understood that the second paging message may be any paging message received by the target terminal before the target terminal receives the first paging message, for example, a paging message received by the target terminal last time.

In some implementable manners, when receiving any paging message, the target terminal can store part or all of information in the paging message. That the value tag of the first paging message is different from a value tag of a second paging message received by the target terminal last time is also referred to as that the value tag of the first paging message is different from a value tag saved by the target terminal most recently, or the value tag of the first paging message is different from a value tag saved by the target terminal.

For example, assuming that the target terminal has received paging message 1, and has received paging message 2 last time, the target terminal considers that the two paging messages are not repeated paging. Based on this, for the currently received paging message 2, the target terminal can respond to paging to paging message 1.

In some implementable manners, the paging method further includes: The target terminal receives a second paging message, where the second paging message includes information about a first paging timer.

In some implementable manners, the information about the first paging timer includes, but is not limited to, at least one of the following:
(1) a second indication, where the second indication indicates to prohibit responding to a paging message received during running of the first paging timer, or the second indication indicates to prohibit responding to paging during running of the first paging timer; and
(2) duration of the first paging timer.

The following is an exemplary description of the second indication:

For example, assuming that the target terminal receives paging message 1 during running of the first paging timer, and the second indication indicates to prohibit responding to a paging message received during the running of the first paging timer, the target terminal cannot respond to paging message 1 during the running of the first paging timer.

For example, assuming that the target terminal receives paging message 1, and the second indication indicates to prohibit responding to paging during the running of the first paging timer, the target terminal cannot respond to paging message 1 during the running of the first paging timer.

In some implementable manners, if the information about the first paging timer does not include the above second indication, the target terminal may alternatively prohibit by default responding to the paging message received during the running of the first paging timer, or prohibit by default responding to paging during the running of the first paging timer.

In some implementable manners, if the information about the first paging timer does not include the duration of the first paging timer, the duration of the first paging timer may be predefined, configured by the first communication device or configured by the core network, but this is not limited.

In some implementable manners, the first paging timer is started in any one of the following cases:
(1) the target terminal has received the second paging message;
(2) it is determined that the at least one terminal identified by the identifier of the at least one terminal includes the target terminal, where the identifier of the at least one terminal is included in the second paging message; and
(3) after the target terminal sends to the first communication device a second paging response corresponding to the second paging message.

In this embodiment of this application, the first paging timer is started in any one of the above cases, which may also be referred to as the first paging timer being started in any one of the above cases when the first paging timer is configured and is not run.

In some implementable manners, the identifier of the at least one terminal is any one of the following: a group identifier of a terminal group including the at least one terminal; and the respective identifier of the at least one terminal.

For example, A-IoT device 1, A-IoT device 2, ..., and A-IoT device 10 constitute a terminal group, and a group identifier of the terminal group is 001.

For example, respective identifiers of A-IoT device 1, A-IoT device 2, ..., and A-IoT device 10 are 1, 2, ..., and 10.

The following is an exemplary description of prohibiting a paging response based on a starting situation of the first paging timer:

For example, in a case that the second indication indicates to prohibit responding to a paging message received during running of the first paging timer, assuming that the target terminal starts the first paging timer after receiving paging message 1, and the target terminal receives paging message 2 during the running of the first paging timer, the target terminal does not respond to paging message 2.

For example, in a case that the second indication indicates to prohibit responding to a paging message received during running of the first paging timer, assuming that after the target terminal receives paging message 1, paging message 1 includes an identifier of at least one terminal and the target terminal determines that the at least one terminal identified by the identifier of the at least one terminal includes the target terminal, it indicates that the target terminal is paged. In this case, the target terminal starts the first paging timer. Assuming that the target terminal receives paging message 2 during the running of the first paging timer, the target terminal does not respond to paging message 2.

For example, in a case that the second indication indicates to prohibit responding to a paging message received during running of the first paging timer, after sending a paging response corresponding to paging message 1, the target terminal can start the first paging timer. Assuming that the target terminal receives paging message 2 during the running of the first paging timer, the target terminal does not respond to paging message 2.

For example, in a case that the second indication indicates to prohibit responding to paging during running of the first paging timer, assuming that the target terminal starts the first paging timer after receiving paging message 1 and then the target terminal receives paging message 2, the target terminal does not respond to paging message 2 during the running of the first paging timer.

For example, in a case that the second indication indicates to prohibit responding to paging during running of the first paging timer, assuming that after the target terminal receives paging message 1, paging message 1 includes an identifier of at least one terminal and the target terminal determines that the at least one terminal identified by the identifier of the at least one terminal includes the target terminal, it indicates that the target terminal is paged. In this case, the target terminal starts the first paging timer. Assuming that the target terminal receives paging message 2 subsequently, the target terminal does not respond to paging message 2 during the running of the first paging timer.

For example, in a case that the second indication indicates to prohibit responding to paging during running of the first paging timer, after sending a paging response corresponding to paging message 1, the target terminal can start the first paging timer. Assuming that the target terminal receives paging message 2 subsequently, the target terminal does not respond to paging message 2 during the running of the first paging timer.

It should be understood that the first paging timer expiring indicates that an interval between two paging messages is sufficiently long. In other words, after successfully completing one paging responding, the target terminal does not need to respond to other paging again within a period of time. The above two paging messages may come from a same cell or different cells or involve a same service or process. The two paging messages may have a same session identifier or value tag, thereby avoiding a plurality of paging responses, or avoiding a plurality of paging responses for a same service or process, or avoiding a plurality of paging responses for a same paging purpose.

For example, in a case that the second indication indicates to prohibit responding to a paging message received during running of the first paging timer, the target terminal starts the first paging timer after receiving paging message 1. Assuming that the target terminal receives paging message 2 after the first paging timer expires, the target terminal can respond to paging message 2.

For example, in a case that the second indication indicates to prohibit responding to a paging message received during running of the first paging timer, assuming that the target terminal determines that at least one terminal identified by an identifier of the at least one terminal includes the target terminal, it indicates that the target terminal is paged. In this case, the target terminal starts the first paging timer. Assuming that the target terminal receives paging message 2 after the first paging timer expires, the target terminal can respond to paging message 2.

For example, in a case that the second indication indicates to prohibit responding to a paging message received during running of the first paging timer, after sending a paging response corresponding to paging message 1, the target terminal can start the first paging timer. Assuming that the target terminal receives paging message 2 after the first paging timer expires, the target terminal can respond to paging message 2.

For example, in a case that the second indication indicates to prohibit responding to paging during running of the first paging timer, assuming that the target terminal starts the first paging timer after receiving paging message 1 and then the target terminal receives paging message 2, the target terminal responds to paging message 2 after the first paging timer expires.

For example, in a case that the second indication indicates to prohibit responding to paging during running of the first paging timer, assuming that after the target terminal receives paging message 1, paging message 1 includes an identifier of at least one terminal and the target terminal determines that the at least one terminal identified by the identifier of the at least one terminal includes the target terminal, it indicates that the target terminal is paged. In this case, the target terminal starts the first paging timer. Assuming that the target terminal receives paging message 2 subsequently, the target terminal responds to paging message 2 after the first paging timer expires.

For example, in a case that the second indication indicates to prohibit responding to paging during running of the first paging timer, after sending a paging response corresponding to paging message 1, the target terminal can start the first paging timer. Assuming that the target terminal receives paging message 2 subsequently, the target terminal responds to paging message 2 after the first paging timer expires.

It should be understood that the first paging timer being configured and being not started indicates that the first paging message is a paging message that is the first one received by the target terminal; it is considered that the target terminal satisfies the paging response condition. In this case, the target terminal can send, to the first communication device, the first paging response corresponding to the first paging message.

In some implementable manners, the first paging message includes information about a second paging timer.

In some implementable manners, the information about the second paging timer includes, but is not limited to, at least one of the following:
(1) a third indication, where the third indication indicates prohibiting responding to a paging message received during running of the second paging timer; or the third indication indicates prohibiting responding to paging during running of the second paging timer; and
(2) duration of the second paging timer.

In some implementable manners, the second paging timer is started in any one of the following cases:
(1) The target terminal has received the first paging message;
(2) it is determined that the at least one terminal identified by the identifier of the at least one terminal includes the target terminal, where the identifier of the at least one terminal is included in the first paging message; and
(3) the target terminal has sent the first paging response to the first communication device.

It should be understood that, for the explanation of the second paging timer, refer to the explanation of the first paging timer. Details are not described again in this embodiment of this application.

It should be understood that the session identifier of the session to which the first paging message belongs being different from the session identifier of the session to which the second paging message belongs indicates that the session to which the first paging message belongs is different from the session to which the second paging message belongs, or that a service involved by the first paging message is different from a service involved by the second paging message.

For example, the session identifier of the session to which the first paging message belongs is 01, which is used to identify a round of inventory process for A-IoT device 1, A-IoT device 2, ..., and A-IoT device 10. The session identifier of the session to which the second paging message belongs is 02, where the second paging message is a paging message received by the target terminal last time, which is used to identify a round of inventory process for A-IoT device 21, A-IoT device 22, ..., and A-IoT device 30. The two session identifiers are different; in this case, the target terminal can respond to the first paging message.

The following provides an exemplary description of item (6) in the paging response condition:
For example, the cell identifier of the cell for sending the first paging message is A, and the cell identifier of the cell for sending the second paging message is B. The second paging message is a paging message received by the target terminal last time; in this case, the target terminal can respond to the first paging message.

The following provides an exemplary description of item (7) in the paging response condition:
For example, the paging range identifier of the first paging message is a cell identifier: A and B, and the paging range identifier of the second paging message is a cell identifier: A. The two cell identifiers are different. The second paging message is a paging message received by the target terminal last time; in this case, the target terminal can respond to the first paging message.

The following provides an exemplary description of item (8) in the paging response condition:
For example, the paging range identifier of the first paging message is a cell identifier: A and B, and the paging range identifier of the second paging message is a cell identifier: C. The second paging message is a paging message received by the target terminal last time. Because the paging range identified by the paging range identifier of the first paging message does not include the paging range identified by the paging range identifier of the second paging message, the target terminal can respond to the first paging message.

The following provides an exemplary description of item (9) in the paging response condition:
For example, the paging range identifier of the first paging message is a cell identifier: A and B, and the paging range identifier of the second paging message is a cell identifier: C, where the second paging message is the paging message received by the target terminal last time. Because the paging range identified by the paging range identifier of the first paging message does not include the cell for sending the second paging message, the target terminal can respond to the first paging message.

The following provides an exemplary description of a situation in which a plurality of items in the paging response condition are combined:
It is assumed that the paging response condition includes: The value tag of the first paging message is different from a value tag of a second paging message received by the target terminal last time; and the session identifier of the session to which the first paging message belongs is different from a session identifier of a session to which the second paging message belongs. The second paging message in this embodiment of this application is the paging message received by the target terminal last time. Details are not described below.

For example, the value tag of the first paging message is 1, the value tag of the second paging message is 2, the session identifier of the session to which the first paging message belongs is 01, and the session identifier of the session to which the second paging message belongs is 02. Because the value tag of the first paging message is different from the value tag of the second paging message received by the target terminal last time, and the session identifier of the session to which the first paging message belongs is different from the session identifier of the session to which the second paging message belongs, the target terminal considers that the first paging message and the second paging message are not repeated paging, and the target terminal can respond to the first paging message.

It is assumed that the paging response condition includes: The value tag of the first paging message is different from a value tag of a second paging message received by the target terminal last time; and the cell identifier of the cell for sending the first paging message is different from the cell identifier of the cell for sending the second paging message.

For example, the value tag of the first paging message is 1, the value tag of the second paging message is 2, the cell identifier of the cell for sending the first paging message is A, and the cell identifier of the cell for sending the second paging message is B. Because the value tag of the first paging message is different from the value tag of the second paging message received by the target terminal last time, and the cell identifier of the cell for sending the first paging message is different from the cell identifier of the cell for sending the second paging message, the target terminal considers that the first paging message and the second paging message are not repeated paging, and the target terminal can respond to the first paging message.

It is assumed that the paging response condition includes: The value tag of the first paging message is different from the value tag of the second paging message received by the target terminal last time, and the paging range identifier of the first paging message is different from the paging range identifier of the second paging message.

For example, the value tag of the first paging message is 1, the value tag of the second paging message is 2, the paging range identifier of the first paging message is a cell identifier: A and B, and the paging range identifier of the second paging message is a cell identifier: A. Because the value tag of the first paging message is different from a value tag of a second paging message received by the target terminal last time, and the paging range identifier of the first paging message is different from the paging range identifier of the second paging message, the target terminal considers that the first paging message and the second paging message are not repeated paging, and the target terminal can respond to the first paging message.

It is assumed that the paging response condition includes: The value tag of the first paging message is different from a value tag of a second paging message received by the target terminal last time, the session identifier of the session to which the first paging message belongs is different from a session identifier of a session to which the second paging message belongs, and the cell identifier of the cell for sending the first paging message is different from a cell identifier of a cell for sending the second paging message.

For example, the value tag of the first paging message is 1, the value tag of the second paging message is 2, the session identifier of the session to which the first paging message belongs is 01, the session identifier of the session to which the second paging message belongs is 02, the cell identifier of the cell for sending the first paging message is A, and the cell identifier of the cell for sending the second paging message is B. Because the value tag of the first paging message is different from the value tag of the second paging message received by the target terminal last time, the session identifier of the session to which the first paging message belongs is different from the session identifier of the session to which the second paging message belongs, and the cell identifier of the cell for sending the first paging message is different from the cell identifier of the cell for sending the second paging message, the target terminal considers that the first paging message and the second paging message are not repeated paging, and the target terminal can respond to the first paging message.

It is assumed that the paging response condition includes: The value tag of the first paging message is different from a value tag of a second paging message received by the target terminal last time, the session identifier of the session to which the first paging message belongs is different from a session identifier of a session to which the second paging message belongs, and the paging range identifier of the first paging message is different from a paging range identifier of the second paging message.

For example, the value tag of the first paging message is 1, the value tag of the second paging message is 2, the session identifier of the session to which the first paging message belongs is 01, the session identifier of the session to which the second paging message belongs is 02, the paging range identifier of the first paging message is a cell identifier: A and B, and the paging range identifier of the second paging message is a cell identifier: A. Because the value tag of the first paging message is different from the value tag of the second paging message received by the target terminal last time, the session identifier of the session to which the first paging message belongs is different from the session identifier of the session to which the second paging message belongs, and the paging range identifier of the first paging message is different from the paging range identifier of the second paging message, the target terminal considers that the first paging message and the second paging message are not repeated paging, and the target terminal can respond to the first paging message.

It is assumed that the paging response condition includes: The value tag of the first paging message is different from a value tag of a second paging message received by the target terminal last time, the cell identifier of the cell for sending the first paging message is different from a cell identifier of a cell for sending the second paging message, and the paging range identifier of the first paging message is different from a paging range identifier of the second paging message.

For example, the value tag of the first paging message is 1, the value tag of the second paging message is 2, the cell identifier of the cell for sending the first paging message is A, the cell identifier of the cell for sending the second paging message is B, the paging range identifier of the first paging message is a cell identifier: A and B, and the paging range identifier of the second paging message is a cell identifier: A. Because the value tag of the first paging message is different from the value tag of the second paging message received by the target terminal last time, the cell identifier of the cell for sending the first paging message is different from the cell identifier of the cell for sending the second paging message, and the paging range identifier of the first paging message is different from the paging range identifier of the second paging message, the target terminal considers that the first paging message and the second paging message are not repeated paging, and the target terminal can respond to the first paging message.

It is assumed that the paging response condition includes: The value tag of the first paging message is different from a value tag of a second paging message received by the target terminal last time, the session identifier of the session to which the first paging message belongs is different from a session identifier of a session to which the second paging message belongs, the cell identifier of the cell for sending the first paging message is different from a cell identifier of a cell for sending the second paging message, and the paging range identifier of the first paging message is different from a paging range identifier of the second paging message.

For example, the value tag of the first paging message is 1, the value tag of the second paging message is 2, the session identifier of the session to which the first paging message belongs is 01, the session identifier of the session to which the second paging message belongs is 02, the cell identifier of the cell for sending the first paging message is A, the cell identifier of the cell for sending the second paging message is B, the paging range identifier of the first paging message is a cell identifier: A and B, and the paging range identifier of the second paging message is a cell identifier: A. Because the value tag of the first paging message is different from the value tag of the second paging message received by the target terminal last time, the session identifier of the session to which the first paging message belongs is different from the session identifier of the session to which the second paging message belongs, the cell identifier of the cell for sending the first paging message is different from the cell identifier of the cell for sending the second paging message, and the paging range identifier of the first paging message is different from the paging range identifier of the second paging message, the target terminal considers that the first paging message and the second paging message are not repeated paging, and the target terminal can respond to the first paging message.

In some implementable manners, after the target terminal sends the first paging response to the first communication device in a case that the paging response condition is satisfied, the target terminal can store part or all of information in the first paging message, for example, store the value tag of the first paging message and the session identifier of the session to which the first paging message belongs, so that when receiving a next paging message, the target terminal can detect, with reference to the information in the first paging message, whether to respond to the next paging message.

It should be understood that, in this embodiment of this application, after the first communication device performs a round of paging for a plurality of terminals, if there is a paging failure for part of terminals, the first communication device can perform repeated paging for these terminals, or perform an expanded paging operation, for example, paging for A-IoT devices 1 to 10 previously and paging for A-IoT devices 1 to 10 and A-IoT devices 21 to 30 subsequently.

In some implementable manners, when the paging response condition is not satisfied, the target terminal does not send the first paging response to the first communication device.

In some implementable manners, when a paging non-response condition is satisfied, the target terminal does not send the first paging response to the first communication device.

In some implementable manners, the paging non-response condition includes, but is not limited to, at least one of the following:
(1) The value tag of the first paging message is the same as a value tag of a second paging message received by the target terminal previously;
(2) a first paging timer has not expired;
(3) the session identifier of the session to which the first paging message belongs is the same as a session identifier of a session to which the second paging message belongs;
(4) the cell identifier of the cell for sending the first paging message is the same as a cell identifier of a cell for sending the second paging message;
(5) the paging range identifier of the first paging message is the same as a paging range identifier of the second paging message;
(6) a paging range identified by the paging range identifier of the first paging message includes a paging range identified by the paging range identifier of the second paging message;
(7) the paging range identified by the paging range identifier of the first paging message includes the cell for sending the second paging message; and
(8) a fourth indication indicates the target terminal not to respond to the first paging message.

It should be understood that item (5), item (6), and item (7) in the paging non-response condition may be selected alternatively.

The following provides an exemplary description of item (1) in the paging non-response condition:
For example, assuming that the target terminal receives paging message 1 and also receives paging message 1 last time, the target terminal considers that the two paging messages are repeated paging. Based on this, the target terminal does not respond to paging to paging message 1 received again.

The following provides an exemplary description of item (2) in the paging non-response condition:
For example, assuming the target terminal receives paging message 1 during running of the first paging timer, that is, the first timer has not expired, the target terminal does not respond to paging message 1.

The following provides an exemplary description of item (3) in the paging non-response condition:
For example, assuming that the session identifier of the session to which the first paging message belongs and the session identifier of the session to which the second paging message belongs are the same, and are 01, the target terminal may not respond to the first paging message.

The following provides an exemplary description of item (4) in the paging non-response condition:
For example, the cell identifier of the cell for sending the first paging message is A, and the cell identifier of the cell for sending the second paging message is also A; in this case, the target terminal may not respond to the first paging message.

The following provides an exemplary description of item (5) in the paging non-response condition:
For example, the paging range identifier of the first paging message is a cell identifier: A and B, and the paging range identifier of the second paging message is a cell identifier: A and B. The two cell identifiers are the same; in this case, the target terminal may not respond to the first paging message.

The following provides an exemplary description of item (6) in the paging non-response condition:
For example, the paging range identifier of the first paging message is a cell identifier: A and B, and the paging range identifier of the second paging message is a cell identifier: A. Because the paging range identified by the paging range identifier of the first paging message includes the paging range identified by the paging range identifier of the second paging message, the target terminal may not respond to the first paging message.

The following provides an exemplary description of item (7) in the paging non-response condition:
For example, the paging range identifier of the first paging message is a cell identifier: A and B, and the paging range identifier of the second paging message is a cell identifier: A. Because the paging range identified by the paging range identifier of the first paging message includes the cell for sending the second paging message, the target terminal may not respond to the first paging message.

It should be understood that, when the fourth indication indicates the target terminal not to respond to the first paging message, it indicates that the first communication device forcibly indicates the target terminal not to respond to the first paging message.

The following provides an exemplary description of a situation in which a plurality of items in the paging non-response condition are combined:
It is assumed that the paging non-response condition includes: The value tag of the first paging message is the same as a value tag of a second paging message received by the target terminal last time, and the session identifier of the session to which the first paging message belongs is the same as a session identifier of a session to which the second paging message belongs.

For example, the value tag of the first paging message is 1, the value tag of the second paging message is 1, the session identifier of the session to which the first paging message belongs is 01, and the session identifier of the session to which the second paging message belongs is 01. Because the value tag of the first paging message is the same as the value tag of the second paging message received by the target terminal last time, and the session identifier of the session to which the first paging message belongs is the same as the session identifier of the session to which the second paging message belongs, the target terminal considers that the first paging message and the second paging message are repeated paging, and the target terminal may not respond to the first paging message.

It is assumed that the paging non-response condition includes: The value tag of the first paging message is the same as a value tag of a second paging message received by the target terminal last time, and the cell identifier of the cell for sending the first paging message is the same as a cell identifier of a cell for sending the second paging message.

For example, the value tag of the first paging message is 1, the value tag of the second paging message is 1, the cell identifier of the cell for sending the first paging message is A, and the cell identifier of the cell for sending the second paging message is A. Because the value tag of the first paging message is the same as the value tag of the second paging message received by the target terminal last time, and the cell identifier of the cell for sending the first paging message is the same as the cell identifier of the cell for sending the second paging message, the target terminal considers that the first paging message and the second paging message are repeated paging, and the target terminal may not respond to the first paging message.

It is assumed that the paging non-response condition includes: The value tag of the first paging message is the same as the value tag of the second paging message received by the target terminal last time, and the paging range identifier of the first paging message is the same as the paging range identifier of the second paging message.

For example, the value tag of the first paging message is 1, the value tag of the second paging message is 1, the paging range identifier of the first paging message is a cell identifier: A and B, and the paging range identifier of the second paging message is a cell identifier: A and B. Because the value tag of the first paging message is the same as the value tag of the second paging message received by the target terminal last time, and the paging range identifier of the first paging message is the same as the paging range identifier of the second paging message, the target terminal considers that the first paging message and the second paging message are repeated paging, and the target terminal may not respond to the first paging message.

It is assumed that the paging non-response condition includes: The value tag of the first paging message is the same as a value tag of a second paging message received by the target terminal last time, the session identifier of the session to which the first paging message belongs is the same as a session identifier of a session to which the second paging message belongs, and the cell identifier of the cell for sending the first paging message is the same as a cell identifier of a cell for sending the second paging message.

For example, the value tag of the first paging message is 1, the value tag of the second paging message is 1, the session identifier of the session to which the first paging message belongs is 01, the session identifier of the session to which the second paging message belongs is 01, the cell identifier of the cell for sending the first paging message is A, and the cell identifier of the cell for sending the second paging message is A. Because the value tag of the first paging message is the same as the value tag of the second paging message received by the target terminal last time, the session identifier of the session to which the first paging message belongs is the same as the session identifier of the session to which the second paging message belongs, and the cell identifier of the cell for sending the first paging message is the same as the cell identifier of the cell for sending the second paging message, the target terminal considers that the first paging message and the second paging message are repeated paging, and the target terminal may not respond to the first paging message.

It is assumed that the paging non-response condition includes: The value tag of the first paging message is the same as the value tag of the second paging message received by the target terminal last time, the session identifier of the session to which the first paging message belongs is the same as the session identifier of the session to which the second paging message belongs, and the paging range identifier of the first paging message is the same as the paging range identifier of the second paging message.

For example, the value tag of the first paging message is 1, the value tag of the second paging message is 1, the session identifier of the session to which the first paging message belongs is 01, the session identifier of the session to which the second paging message belongs is 01, the paging range identifier of the first paging message is a cell identifier: A and B, and the paging range identifier of the second paging message is a cell identifier: A and B. Because the value tag of the first paging message is the same as the value tag of the second paging message received by the target terminal last time, the session identifier of the session to which the first paging message belongs is the same as the session identifier of the session to which the second paging message belongs, and the paging range identifier of the first paging message is the same as the paging range identifier of the second paging message, the target terminal considers that the first paging message and the second paging message are repeated paging, and the target terminal may not respond to the first paging message.

It is assumed that the paging non-response condition includes: The value tag of the first paging message is the same as a value tag of a second paging message received by the target terminal last time, the cell identifier of the cell for sending the first paging message is the same as a cell identifier of a cell for sending the second paging message, and the paging range identifier of the first paging message is the same as a paging range identifier of the second paging message.

For example, the value tag of the first paging message is 1, the value tag of the second paging message is 1, the cell identifier of the cell for sending the first paging message is A, the cell identifier of the cell for sending the second paging message is A, the paging range identifier of the first paging message is a cell identifier: A and B, and the paging range identifier of the second paging message is a cell identifier: A and B. Because the value tag of the first paging message is the same as the value tag of the second paging message received by the target terminal last time, the cell identifier of the cell for sending the first paging message is the same as the cell identifier of the cell for sending the second paging message, and the paging range identifier of the first paging message is the same as the paging range identifier of the second paging message, the target terminal considers that the first paging message and the second paging message are repeated paging, and the target terminal may not respond to the first paging message.

It is assumed that the paging non-response condition includes: The value tag of the first paging message is the same as a value tag of a second paging message received by the target terminal last time, the session identifier of the session to which the first paging message belongs is the same as a session identifier of a session to which the second paging message belongs, the cell identifier of the cell for sending the first paging message is the same as a cell identifier of a cell for sending the second paging message, and the paging range identifier of the first paging message is the same as a paging range identifier of the second paging message.

For example, the value tag of the first paging message is 1, the value tag of the second paging message is 1, the session identifier of the session to which the first paging message belongs is 01, the session identifier of the session to which the second paging message belongs is 01, the cell identifier of the cell for sending the first paging message is A, the cell identifier of the cell for sending the second paging message is A, the paging range identifier of the first paging message is a cell identifier: A and B, and the paging range identifier of the second paging message is a cell identifier: A and B. Because the value tag of the first paging message is the same as the value tag of the second paging message received by the target terminal last time, the session identifier of the session to which the first paging message belongs is the same as the session identifier of the session to which the second paging message belongs, the cell identifier of the cell for sending the first paging message is the same as the cell identifier of the cell for sending the second paging message, and the paging range identifier of the first paging message is the same as the paging range identifier of the second paging message, the target terminal considers that the first paging message and the second paging message are repeated paging, and the target terminal may not respond to the first paging message.

As described above, a paging process may be triggered by an access network device or a core network. Based on this, the above first paging message may be generated by a first communication device, or triggered by a second communication device. Details are as follows:
FIG. 6 is a flowchart of interaction of another paging method according to an embodiment of this application. As shown in FIG. 6, the method may be performed by a target terminal, a first communication device, and a second communication device. The target terminal may be, but is not limited to, the terminal 11 in FIG. 2. The first communication device may be, but is not limited to, the first communication device in FIG. 2. The second communication device may be, but is not limited to, the second communication device in FIG. 2. As shown in FIG. 6, the method may include the following steps:
S610: The second communication device sends a third paging message to the first communication device.

S620: The first communication device generates a first paging message based on the third paging message.

S630: The first communication device sends the first paging message to the target terminal.

S640: The target terminal sends a first paging response to the first communication device in a case that a paging response condition is satisfied.

In some implementable manners, the third paging message includes part or all of information in the first paging message other than a cell identifier of a cell for sending the first paging message.

For example, the third paging message includes at least one of the following:
(1) a value tag (value tag) for identifying the third paging message;
(2) a session identifier of a session to which the third paging message belongs;
(3) a paging range identifier of the third paging message; and
(4) a first indication, where the first indication indicates the target terminal to respond to the first paging message, or indicates the target terminal to detect, based on information other than the first indication, whether to respond to the first paging message.

In some implementable manners, the value tag of the third paging message is the same as a value tag of the first paging message.

In some implementable manners, the third paging message includes information about a second timer.

The information about the second paging timer included in the third paging message is the same as information about the second paging timer included in the first paging message.

In some implementable manners, the session identifier of the session to which the third paging message belongs is the same as a session identifier of a session to which the first paging message belongs.

In some implementable manners, the paging range identifier of the third paging message may be the same as or different from a paging range identifier of the first paging message, for example, the paging range identifier of the third paging message is respective identifiers 1 and 2 of access network device 1 and access network device 2, while the paging range identifier of the first paging message is identifier 1 of access network device 1.

It should be understood that, for the explanations of various information in the third paging message, refer to the explanations of various information in the first paging message above. Details are not described again in this embodiment of this application.

In some implementable manners, at least one type of information in the third paging message is carried in paging assistance information of the third paging message. For example, the value tag of the third paging message may be carried in the paging assistance information.

In some implementable manners, the first communication device is an access network device, and the second communication device is a core network device.

In some implementable manners, the first communication device and the second communication device are DUs of one access network device.

It should be understood that, in this embodiment of this application, after the first communication device performs a round of paging for a plurality of terminals, if there is a paging failure for part of terminals, the first communication device can perform repeated paging for these terminals, or perform an expanded paging operation, for example, paging for A-IoT devices 1 to 10 previously and paging for A-IoT devices 1 to 10 and A-IoT devices 21 to 30 subsequently.

In this embodiment of this application, the target terminal responds to paging only in a case that the paging response condition is satisfied. This avoids an invalid paging response and further avoids execution of an invalid task.

The paging method provided in this embodiment of this application may be performed by a paging apparatus. In embodiments of this application, the paging apparatus executing the paging method is taken as an example to describe a paging apparatus provided in an embodiment of this application.

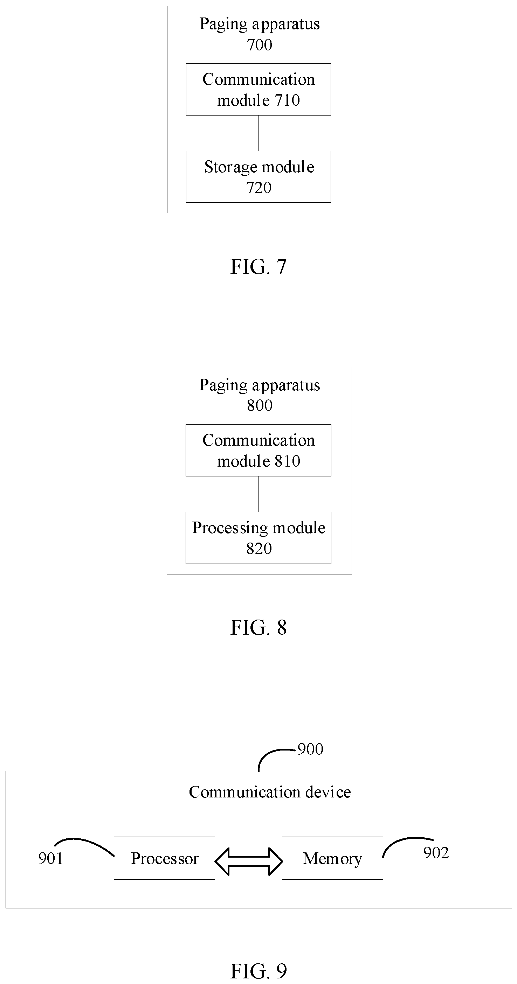

FIG. 7 is a schematic diagram of a paging apparatus 700 according to an embodiment of this application. As shown in FIG. 7, the apparatus 700 includes a communication module 710, configured to: receive a first paging message sent by a first communication device; and send a first paging response to the first communication device in a case that a paging response condition is satisfied, where
the first paging message includes at least one of the following:
a value tag for identifying the first paging message;
a session identifier of a session to which the first paging message belongs;
a cell identifier of a cell for sending the first paging message;
a paging range identifier of the first paging message; and
a first indication, where the first indication indicates the paging apparatus to respond to the first paging message, or indicates the paging apparatus to detect, based on information other than the first indication, whether to respond to the first paging message.

In some implementable manners, the paging response condition includes at least one of the following:
the value tag of the first paging message is different from a value tag of a second paging message previously received by the paging apparatus;
a first paging timer expires;
the first paging timer is configured and the first paging timer is not started;
the session identifier of the session to which the first paging message belongs is different from a session identifier of a session to which the second paging message belongs;
the cell identifier of the cell for sending the first paging message is different from a cell identifier of a cell for sending the second paging message;
the paging range identifier of the first paging message is different from a paging range identifier of the second paging message;
a paging range identified by the paging range identifier of the first paging message does not include a paging range identified by the paging range identifier of the second paging message;
the paging range identified by the paging range identifier of the first paging message does not include the cell for sending the second paging message; and
the first indication indicates the paging apparatus to respond to the first paging message.

In some implementable manners, the communication module 710 is further configured to: receive a second paging message, where the second paging message includes information about a first paging timer.

In some implementable manners, the information about the first paging timer includes at least one of the following:
a second indication, where the second indication indicates to prohibit responding to a paging message received during running of the first paging timer; and
duration of the first paging timer.

In some implementable manners, the duration of the first paging timer is predefined, configured by the first communication device, or configured by a core network.

In some implementable manners, the first paging timer is started in any one of the following cases:
the paging apparatus has received the second paging message;
it is determined that at least one terminal identified by an identifier of the at least one terminal includes the paging apparatus, where the identifier of the at least one terminal is included in the second paging message;
after the paging apparatus sends to the first communication device a second paging response corresponding to the second paging message.

In some implementable manners, the identifier of the at least one terminal is any one of the following:
a group identifier of a terminal group including the at least one terminal; and
the respective identifier of the at least one terminal.

In some implementable manners, the paging range identifier of the first paging message includes at least one of the following:
an identifier of the first communication device;
an identifier of a target cell;
a TA identifier of a TA in which the target cell is located; and
an RNA identifier of an RNA in which the target cell is located, where
a paging message sent by the target cell has a same paging purpose as the first paging message.

In some implementable manners, the apparatus 700 further includes a storage module 720, configured to: after the communication module 710 sends the first paging response to the first communication device in a case that the paging response condition is satisfied, store part or all of information in the first paging message.

In some implementable manners, the first paging message is generated by the first communication device.

In some implementable manners, the first paging message is generated by the first communication device based on a third paging message from a second communication device.

In some implementable manners, the third paging message includes part or all of information in the first paging message other than the cell identifier of the cell for sending the first paging message.

In some implementable manners, at least one type of information in the third paging message is carried in paging assistance information of the third paging message.

In some implementable manners, the first communication device is an access network device, an intermediate node, an assisting node, a terminal device, a reader/writer, or a DU of an access network device.

In some implementable manners, the paging apparatus is an A-IoT device.

In some implementable manners, the second communication device is a core network device or a CU of an access network device.

The paging apparatus in this embodiment of this application may be an electronic device such as an electronic device with an operating system or a component in an electronic device, for example, an integrated circuit or a chip. The electronic device may be a terminal, or another device other than a terminal. For example, the terminal may include, but is not limited to, the types of the terminals 11 listed above, and the another device may be a server, a network attached storage (Network Attached Storage, NAS), or the like. This is not specifically limited in this embodiment of this application.

The paging apparatus provided in this embodiment of this application can implement the processes implemented by the target terminal in the method embodiments shown in FIG. 5 and FIG. 6, and achieve the same technical effects. To avoid repetition, details are not described herein again.

FIG. 8 is a schematic diagram of a paging apparatus 800 according to an embodiment of this application. As shown in FIG. 8, the apparatus 800 includes a communication module 810, configured to: send a first paging message to a target terminal; and receive a first paging response sent by the target terminal in a case that a paging response condition is satisfied, where
the first paging message includes at least one of the following:
a value tag for identifying the first paging message;
a session identifier of a session to which the first paging message belongs;
a cell identifier of a cell for sending the first paging message;
a paging range identifier of the first paging message; and
a first indication, where the first indication indicates the target terminal to respond to the first paging message, or indicates the target terminal to detect, based on information other than the first indication, whether to respond to the first paging message.

In some implementable manners, the paging response condition includes at least one of the following:
the value tag of the first paging message is different from a value tag of a second paging message received by the target terminal previously;
a first paging timer expires;
the first paging timer is configured and the first paging timer is not started;
the session identifier of the session to which the first paging message belongs is different from a session identifier of a session to which the second paging message belongs;
the cell identifier of the cell for sending the first paging message is different from a cell identifier of a cell for sending the second paging message;
the paging range identifier of the first paging message is different from a paging range identifier of the second paging message;
a paging range identified by the paging range identifier of the first paging message does not include a paging range identified by the paging range identifier of the second paging message;
the paging range identified by the paging range identifier of the first paging message does not include the cell for sending the second paging message; and
the first indication indicates the target terminal to respond to the first paging message.

In some implementable manners, the communication module 810 is further configured to send a second paging message, where the second paging message includes information about a first paging timer.

In some implementable manners, the information about the first paging timer includes at least one of the following:
a second indication, where the second indication indicates to prohibit responding to a paging message received during running of the first paging timer; and
duration of the first paging timer.

In some implementable manners, the duration of the first paging timer is predefined, configured by the paging apparatus, or configured by the core network.

In some implementable manners, the first paging timer is started in any one of the following cases:
the target terminal has received the second paging message;
it is determined that at least one terminal identified by an identifier of the at least one terminal includes the target terminal, where the identifier of the at least one terminal is included in the second paging message;
after the target terminal sends to the paging apparatus a second paging response corresponding to the second paging message.

In some implementable manners, the identifier of the at least one terminal is any one of the following:
a group identifier of a terminal group including the at least one terminal; and
the respective identifier of the at least one terminal.

In some implementable manners, the paging range identifier of the first paging message includes at least one of the following:
an identifier of the paging apparatus;
an identifier of a target cell;
a TA identifier of a TA in which the target cell is located; and
an RNA identifier of an RNA in which the target cell is located, where
a paging message sent by the target cell has a same paging purpose as the first paging message.

In some implementable manners, the first paging message is generated by the paging apparatus.

In some implementable manners, the apparatus 800 further includes a processing module 820. The communication module 810 is further configured to: before the communication module 810 sends the first paging message to the target terminal, receive a third paging message sent by a second communication device. The processing module 820 is configured to generate the first paging message based on the third paging message.

In some implementable manners, the third paging message includes part or all of information in the first paging message other than the cell identifier of the cell for sending the first paging message.

In some implementable manners, at least one type of information in the third paging message is carried in paging assistance information of the third paging message.

In some implementable manners, the paging apparatus is an access network device, an intermediate node, an assisting node, a terminal device, a reader/writer, or a DU of an access network device.

In some implementable manners, the target terminal is an A-IoT device.

In some implementable manners, the second communication device is a core network device or a CU of an access network device.

The information reporting apparatus for uplink data in this embodiment of this application may be an electronic device such as an electronic device with an operating system or a component in an electronic device, for example, an integrated circuit or a chip. The electronic device may be a communication device or another device other than a communication device. For example, the communication device may include, but is not limited to, the first communication device listed above, and the another device may be a server, a NAS, or the like. This is not specifically limited in this embodiment of this application.

The paging apparatus provided in this embodiment of this application can implement the processes implemented by the first communication device in the method embodiments shown in FIG. 5 and FIG. 6, and achieve the same technical effects. To avoid repetition, details are not described herein again.

FIG. 9 is a schematic block diagram of a communication device according to an embodiment of this application. As shown in FIG. 9, this embodiment of this application further provides a communication device 900, including a processor 901 and a memory 902. A program or instructions runnable on the processor 901 are stored on the memory 902. For example, when the communication device 900 is a terminal, the program or instructions, when executed by the processor 901, implement the steps performed by the target terminal in the method embodiments shown in FIG. 5 and FIG. 6, and the same technical effects can be achieved. When the communication device 900 is a first communication device, the program or instructions, when executed by the processor 901, implement the steps performed by the first communication device in the method embodiments shown in FIG. 5 and FIG. 6, and the same technical effects can be achieved. To avoid repetition, details are not described herein again.

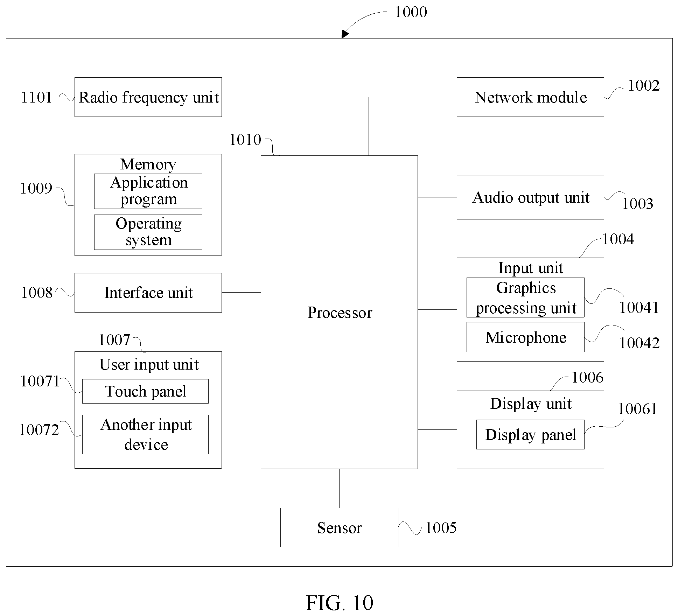

An embodiment of this application further provides a terminal, including a processor and a communication interface. The communication interface is coupled to the processor, and the processor is configured to run a program or instructions to implement the steps performed by the target terminal in the method embodiments shown in FIG. 5 and FIG. 6. The terminal embodiment corresponds to the above terminal-side method embodiment, the implementation processes and implementations of the foregoing method embodiments can all be applied to the terminal embodiment, and the same technical effects can be achieved. Specifically, FIG. 10 is a schematic diagram of a hardware structure of a terminal implementing an embodiment of this application.

The terminal 1000 includes, but is not limited to, at least part of the following components: a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

Persons skilled in the art can understand that the terminal 1000 may further include a power supply (such as a battery) supplying power to the components, and the power supply may be logically connected to the processor 1010 via a power management system, thereby implementing functions such as charging, discharging, and power consumption management via the power management system. The terminal structure shown in FIG. 10 does not constitute a limitation to the terminal. The terminal may include more or fewer components than those shown in the figure, or combine certain components, or arrange different components. To avoid repetition, details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of still pictures or videos obtained by an image capture apparatus (such as a camera) in a video capture mode or an image capture mode. The display unit 1006 may include a display panel 10061. The display panel 10061 may be configured in the form of a liquid crystal display, an organic light-emitting diode, or the like. The user input unit 1007 includes at least one of a touch panel 10071 and another input device 10072. The touch panel 10071 is also referred to as a touch screen. The touch panel 10071 may include two parts: a touch detection apparatus and a touch controller. The another input device 10072 may include, but is not limited to, a physical keyboard, a function key (such as a volume control key, a switch key, or the like), a trackball, a mouse, and a joystick. Details are not described herein again.

In this embodiment of this application, after receiving downlink data from a network device, the radio frequency unit 1001 can transmit the downlink data to the processor 1010 for processing. In addition, the radio frequency unit 1001 can send uplink data to the network device. Generally, the radio frequency unit 1001 includes, but is not limited to, an antenna, an amplifier, a transceiver, a coupler, a low noise amplifier, a duplexer, and the like.

The memory 1009 can be used to store a software program or instructions as well as various data. The memory 1009 may mainly include a first storage area storing the program or instructions and a second storage area storing the data. The first storage area can store an operating system, an application program or instructions required for at least one function (such as a sound playing function and an image playing function), and the like. In addition, the memory 1009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes, but is not limited to, these and any other suitable types of memories.

The processor 1010 may include one or more processing units. Optionally, the processor 1010 integrates an application processor and a modem processor. The application processor mainly processes operations related to an operating system, a user interface, an application program, and the like. The modem processor mainly processes a wireless communication signal, such as a baseband processor. It can be understood that the modem processor may alternatively not be integrated into the processor 1010.

The radio frequency unit 1001 is configured to: receive a first paging message sent by a first communication device; and send a first paging response to the first communication device in a case that a paging response condition is satisfied.

It can be understood that, for the implementation processes of the implementations mentioned in this embodiment, reference may be made to the related description of the corresponding terminal-side method embodiment, and the same or corresponding technical effects can be achieved. To avoid repetition, details are not repeated herein again.

An embodiment of this application further provides a communication device, including a processor and a communication interface. The communication interface is coupled to the processor, and the processor is configured to run a program or instructions to implement the processes implemented by the first communication device in the method embodiments shown in FIG. 5 and FIG. 6. The embodiment of the communication device corresponds to embodiment of the method performed by the foregoing first communication device. The implementation processes and implementations of the above method embodiments can all be applied to the embodiment of the communication device, and the same technical effects can be achieved.

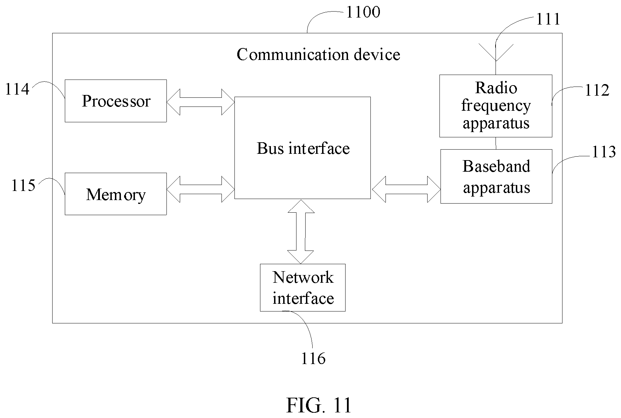

Specifically, an embodiment of this application further provides a communication device. As shown in FIG. 11, the communication device 1100 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information through the antenna 111, and sends the received information to the baseband apparatus 113 for processing. In a downlink direction, the baseband apparatus 113 processes to-be-sent information, and sends processed to-be-sent information to the radio frequency apparatus 112, and the radio frequency apparatus 112 processes the received information, and sends processed received information out through the antenna 111.

The method performed by the communication device in the above embodiments can be implemented in the baseband apparatus 113, and the baseband apparatus 113 includes a baseband processor.

The baseband apparatus 113 may, for example, include at least one baseband board. A plurality of chips are disposed on the baseband board, as shown in FIG. 11, where one of the chips is, for example, a baseband processor, and is connected to the memory 115 through a bus interface, to call a program in the memory 115, and execute the operations of the communication device shown in the above method embodiments.

The communication device may further include a network interface 116. The interface is, for example, a common public radio interface (Common Public Radio Interface, CPRI).

Specifically, the communication device 1100 in this embodiment of the present invention further includes: instructions or a program stored on the memory 115 and runnable on the processor 114. The processor 114 calls the instructions or program in the memory 115 to perform the steps performed by the first communication device in the method embodiments shown in FIG. 5 and FIG. 6, and achieves the same technical effects. To avoid repetition, details are not described herein again.

An embodiment of this application further provides a readable storage medium. A program or instructions are stored on the readable storage medium. The program or instructions, when executed by a processor, implement the processes of the method embodiments shown in FIG. 5 and FIG. 6, and the same technical effects can be achieved. To avoid repetition, details are not described herein again.

The processor is the processor in the terminal described in the above embodiments. The readable storage medium includes a computer-readable storage medium such as a computer read-only memory ROM, a random access memory RAM, a magnetic disk, or an optical disk. In some embodiments, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the method embodiments shown in FIG. 5 and FIG. 6, and can achieve the same technical effects. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product. The computer program/program product is stored in a storage medium. The computer program/program product is executed by at least one processor to implement the processes of the method embodiments shown in FIG. 5 and FIG. 6, and the same technical effects can be achieved. To avoid repetition, details are not described herein again.

An embodiment of this application further provides a paging system, including a terminal and a communication device. The terminal can be configured to execute the processes corresponding to the target terminal in the method embodiments shown in FIG. 5 and FIG. 6 as described above. The communication device is configured to execute the processes corresponding to the first communication device in the method embodiments shown in FIG. 5 and FIG. 6 as described above.

It should be noted that, in this specification, the terms "include", "comprise", or any other variants thereof are intended to cover non-exclusive inclusion, such that a process, method, article, or apparatus including a series of elements not only includes those elements, but also includes other elements not explicitly listed, or elements inherent to such process, method, article, or apparatus. Without further limitation, an element defined by the statement "including one ..." does not exclude the presence of additional identical elements in the process, method, article, or apparatus including the element. In addition, it should be pointed out that the scope of the methods and apparatuses in embodiments of this application is not limited to performing the functions in the order shown or discussed, and may also include performing the functions substantially simultaneously or in the reverse order according to the involved functions, for example, the described methods may be performed in an order different from that described, and the steps may alternatively be added, omitted or combined. In addition, features described with reference to certain examples may be combined in other examples.

Through the description of the above embodiments, persons skilled in the art can clearly understand that the above embodiment methods can be implemented by means of a computer software product plus a necessary general hardware platform, and certainly, may alternatively be implemented by hardware. The computer software product is stored in a storage medium (such as a ROM, a RAM, a magnetic disk, or an optical disk), and includes several instructions for enabling a terminal or a first communication device to perform the methods described in embodiments of this application.

Embodiments of this application have been described above with reference to the accompanying drawings, but this application is not limited to the specific embodiments described above. The specific embodiments described above are merely illustrative, rather than restrictive. Persons of ordinary skill in the art can make many forms of embodiments under the inspiration of this application, without departing from the spirit of this application and the protection scope of the claims, and these embodiments all fall within the protection of this application.

## Claims

1. A paging method, comprising:
receiving, by a target terminal, a first paging message sent by a first communication device; and
sending, by the target terminal, a first paging response to the first communication device in a case that a paging response condition is satisfied, wherein
the first paging message comprises at least one of the following:
a value tag for identifying the first paging message;
a session identifier of a session to which the first paging message belongs;
a cell identifier of a cell for sending the first paging message;
a paging range identifier of the first paging message; and
a first indication, wherein the first indication indicates the target terminal to respond to the first paging message, or indicates the target terminal to detect, based on information other than the first indication, whether to respond to the first paging message.

2. The method according to claim 1, wherein the paging response condition comprises at least one of the following:
the value tag of the first paging message is different from a value tag of a second paging message received by the target terminal previously;
a first paging timer expires;
the first paging timer is configured and the first paging timer is not started;
the session identifier of the session to which the first paging message belongs is different from a session identifier of a session to which the second paging message belongs;
the cell identifier of the cell for sending the first paging message is different from a cell identifier of a cell for sending the second paging message;
the paging range identifier of the first paging message is different from a paging range identifier of the second paging message;
a paging range identified by the paging range identifier of the first paging message does not comprise a paging range identified by the paging range identifier of the second paging message;
the paging range identified by the paging range identifier of the first paging message does not comprise the cell for sending the second paging message; and
the first indication indicates the target terminal to respond to the first paging message.

3. The method according to claim 1 or 2, wherein the method further comprises: receiving a second paging message, wherein
the second paging message comprises information about the first paging timer.

4. The method according to claim 3, wherein the information about the first paging timer comprises at least one of the following:
a second indication, wherein the second indication indicates to prohibit responding to a paging message received during running of the first paging timer; and
duration of the first paging timer.

5. The method according to claim 2 or 3, wherein the duration of the first paging timer is predefined, configured by the first communication device, or configured by a core network.

6. The method according to any one of claims 2 to 5, wherein the first paging timer is started in any one of the following cases:
the target terminal has received the second paging message;
it is determined that at least one terminal identified by an identifier of the at least one terminal comprises the target terminal, wherein the identifier of the at least one terminal is comprised in the second paging message; and
after the target terminal sends to the first communication device a second paging response corresponding to the second paging message.

7. The method according to claim 6, wherein the identifier of the at least one terminal is any one of the following:
a group identifier of a terminal group comprising the at least one terminal; and
the respective identifier of the at least one terminal.

8. The method according to any one of claims 2 to 7, wherein the paging range identifier of the first paging message comprises at least one of the following:
an identifier of the first communication device;
an identifier of a target cell;
a tracking area TA identifier of a TA in which the target cell is located; and
a radio access network notification area RNA identifier of an RNA in which the target cell is located, wherein
a paging message sent by the target cell has a same paging purpose as the first paging message.

9. The method according to any one of claims 1 to 8, wherein after the sending, by the target terminal, a first paging response to the first communication device in a case that a paging response condition is satisfied, the method further comprises:
storing, by the target terminal, part or all of information in the first paging message.

10. The method according to any one of claims 1 to 9, wherein the first paging message is generated by the first communication device.

11. The method according to any one of claims 1 to 9, wherein the first paging message is generated by the first communication device based on a third paging message from a second communication device.

12. The method according to claim 11, wherein the third paging message comprises part or all of information in the first paging message other than the cell identifier of the cell for sending the first paging message.

13. The method according to claim 12, wherein at least one type of information in the third paging message is carried in paging assistance information of the third paging message.

14. The method according to any one of claims 1 to 13, wherein the first communication device is an access network device, an intermediate node, an assisting node, a terminal device, a reader/writer, or a distributed unit DU of an access network device.

15. The method according to any one of claims 1 to 14, wherein the target terminal is an ambient power-enabled Internet of Things A-IoT device.

16. The method according to any one of claims 11 to 13, wherein the second communication device is a core network device or a central unit CU of an access network device.

17. A paging method, comprising:
sending, by a first communication device, a first paging message to a target terminal; and
receiving, by the first communication device, a first paging response sent by the target terminal in a case that a paging response condition is satisfied, wherein
the first paging message comprises at least one of the following:
a value tag for identifying the first paging message;
a session identifier of a session to which the first paging message belongs;
a cell identifier of a cell for sending the first paging message;
a paging range identifier of the first paging message; and
a first indication, wherein the first indication indicates the target terminal to respond to the first paging message, or indicates the target terminal to detect, based on information other than the first indication, whether to respond to the first paging message.

18. The method according to claim 17, wherein the paging response condition comprises at least one of the following:
the value tag of the first paging message is different from a value tag of a second paging message received by the target terminal previously;
a first paging timer expires;
the first paging timer is configured and the first paging timer is not started;
the session identifier of the session to which the first paging message belongs is different from a session identifier of a session to which the second paging message belongs;
the cell identifier of the cell for sending the first paging message is different from a cell identifier of a cell for sending the second paging message;
the paging range identifier of the first paging message is different from a paging range identifier of the second paging message;
a paging range identified by the paging range identifier of the first paging message does not comprise a paging range identified by the paging range identifier of the second paging message;
the paging range identified by the paging range identifier of the first paging message does not comprise the cell for sending the second paging message; and
the first indication indicates the target terminal to respond to the first paging message.

19. The method according to claim 17 or 18, wherein the method further comprises: sending a second paging message, wherein
the second paging message comprises information about the first paging timer.

20. The method according to claim 19, wherein the information about the first paging timer comprises at least one of the following:
a second indication, wherein the second indication indicates to prohibit responding to a paging message received during running of the first paging timer; and
duration of the first paging timer.

21. The method according to claim 18 or 19, wherein the duration of the first paging timer is predefined, configured by the first communication device, or configured by a core network.

22. The method according to any one of claims 18 to 21, wherein the first paging timer is started in any one of the following cases:
the target terminal has received the second paging message;
it is determined that at least one terminal identified by an identifier of the at least one terminal comprises the target terminal, wherein the identifier of the at least one terminal is comprised in the second paging message; and
after the target terminal sends to the first communication device a second paging response corresponding to the second paging message.

23. The method according to claim 22, wherein the identifier of the at least one terminal is any one of the following:
a group identifier of a terminal group comprising the at least one terminal; and
the respective identifier of the at least one terminal.

24. The method according to any one of claims 18 to 23, wherein the paging range identifier of the first paging message comprises at least one of the following:
an identifier of the first communication device;
an identifier of a target cell;
a TA identifier of a TA in which the target cell is located; and
an RNA identifier of an RNA in which the target cell is located, wherein
a paging message sent by the target cell has a same paging purpose as the first paging message.

25. The method according to any one of claims 17 to 24, wherein the first paging message is generated by the first communication device.

26. The method according to any one of claims 17 to 24, wherein before the first communication device sends the first paging message to the target terminal, the method further comprises:
receiving, by the first communication device, a third paging message sent by a second communication device; and
generating, by the first communication device, the first paging message based on the third paging message.

27. The method according to claim 26, wherein the third paging message comprises part or all of information in the first paging message other than the cell identifier of the cell for sending the first paging message.

28. The method according to claim 27, wherein at least one type of information in the third paging message is carried in paging assistance information of the third paging message.

29. The method according to any one of claims 17 to 28, wherein the first communication device is an access network device, an intermediate node, an assisting node, a terminal device, a reader/writer, or a DU of an access network device.

30. The method according to any one of claims 17 to 29, wherein the target terminal is an A-IoT device.

31. The method according to any one of claims 26 to 28, wherein the second communication device is a core network device or a CU of an access network device.

32. A paging apparatus, comprising a communication module, configured to:
receive a first paging message sent by a first communication device; and
send a first paging response to the first communication device in a case that a paging response condition is satisfied, wherein
the first paging message comprises at least one of the following:
a value tag for identifying the first paging message;
a session identifier of a session to which the first paging message belongs;
a cell identifier of a cell for sending the first paging message;
a paging range identifier of the first paging message; and
a first indication, wherein the first indication indicates the paging apparatus to respond to the first paging message, or indicates the paging apparatus to detect, based on information other than the first indication, whether to respond to the first paging message.

33. A paging apparatus, comprising a communication module, configured to:
send a first paging message to a target terminal; and
receive a first paging response sent by the target terminal in a case that a paging response condition is satisfied, wherein
the first paging message comprises at least one of the following:
a value tag for identifying the first paging message;
a session identifier of a session to which the first paging message belongs;
a cell identifier of a cell for sending the first paging message;
a paging range identifier of the first paging message; and
a first indication, wherein the first indication indicates the target terminal to respond to the first paging message, or indicates the target terminal to detect, based on information other than the first indication, whether to respond to the first paging message.

34. A terminal, comprising a processor and a memory, wherein the memory stores a program or instructions runnable on the processor; and when executed by the processor, the program or instructions implement the steps of the paging method according to any one of claims 1 to 16.

35. A communication device, comprising a processor and a memory, wherein the memory stores a program or instructions runnable on the processor; and when executed by the processor, the program or instructions implement the steps of the paging method according to any one of claims 17 to 31.

36. A readable storage medium, wherein a program or instructions are stored on the readable storage medium; and when executed by a processor, the program or instructions implement the paging method according to any one of claims 1 to 16, or the steps of the paging method according to any one of claims 17 to 31.
